# EUROPEAN PATENT SPECIFICATION

(11) **EP 2 375 547 B1**
(45) Date of publication and mention of the grant of the patent: **20.08.2014**
(21) Application number: 11161956.5
(22) Date of filing: 11.04.2011
(51) Int. Cl.: H02K 5/14, H02K 5/15

(54) **Direct current electric motor**
Gleichstrommotor
Moteur électrique à courant continu

(30) Priority: 12.04.2010 IT VR20100068
(43) Date of publication of application: 12.10.2011
(73) Proprietor: Movimotor S.r.l., 36078 Valdagno (VI) (IT)
(72) Inventor: Bertoldi, Devid, 36078 Valdagno (VI) (IT)
(74) Representative: Feltrinelli, Secondo Andrea

(56) References cited:
- DE-A1- 2 037 993
- DE-T2- 69 601 806
- FR-A1- 2 743 213
- JP-A- 58 175 947
- US-A- 3 745 393

## Description

The present invention concerns a direct current electric motor.

More specifically, the present invention concerns a direct current electric motor of the type using brushes with simplified assembly.

### PRIOR ART

It is known that there are electric motors fed with direct current comprising a stator, a rotating rotor with windings, and a cap, fixed to the stator, which carries the brushes that allow the windings of the rotor to be fed with electricity.

In greater detail, in these motors the brushes are foreseen on a special circular base that is fixed onto the cap through removable connection means; such means typically consist of screws passing through holes foreseen in the base and engaged in respective threaded holes foreseen in the brush-carrying cap.

This constructive solution which distinguishes known motors is not without drawbacks.

The main one of these consists of the fact that the assembly of each motor is too laborious, i.e. it takes too long to carry out, not meeting the current market requirements. Indeed, a typical assembly cycle of the motor foresees at least one step of fixing the brush-carrying base to the respective cap through a certain number of screws or locking rings, and then a step of fixing the cap itself, for example it is anchored with through-screws or with other removable means for example through pressure, to the stator of the motor.

Document DE 696 01 806 discloses a device according to the preamble of claim 1.

### PURPOSES OF THE INVENTION

The technical task of the present invention is therefore to provide a direct current electric motor that can be mounted quickly and with a smaller number of operations.

This purpose is accomplished by the direct current electric motor according to the attached claim 1. The brush-carrying base is mounted locked in a pack between the cap and the stator, thanks to the presence, on the cap itself, of centred coupling means with the stator along which the base itself is engaged at its peripheral portions: the coupling means allow a precise blocking of the cap to be carried out on the stator without the need to use other connection members.

Further advantageous characteristics are described in the dependent claims.

### BRIEF DESCIPTION OF THE DRAWINGS

The characteristics of the invention will be better understood by any man skilled in the art from the following description and from the attached tables of drawings, given as a non-limiting example, in which:
- figure 1 is a perspective view of an electric motor according to the present invention;
- figure 2 is a side view of the electric motor;
- figure 3 is a front view of the electric motor;
- figure 4 is an exploded side view of the electric motor;
- figure 5 is an exploded perspective view of the electric motor;
- figure 6 is a detailed perspective view of the cap and of the brush-carrying base according to the embodiment of figure 5;
- figure 7 is a detailed and exploded perspective view, from a different angle, of the cap and of the brush-carrying base according to the embodiment of figures 5, 6;
- figure 8 is a detailed and exploded perspective view, from yet another angle, of the cap and of the brush-carrying base of the motor of figures 5, 6, 7;
- figure 9 is an exploded perspective view of another embodiment of the electric motor according to the present invention;
- figure 10 is a detailed perspective view of the cap and of the brush-carrying base of the motor according to the embodiment of figure 9;
- figure 11 is a detailed and exploded perspective view, from a different angle, of the cap and of the brush-carrying base of the motor of figures 9, 10;
- figure 12 is a detailed and exploded perspective view, from yet another angle, of the cap and of the brush-carrying base of the motor of figures 9, 10, 11;
- figure 13 is an exploded perspective view of another embodiment of the motor according to the present invention;
- figure 14 is a perspective view of the cap of the motor according to the embodiment of figure 13;
- figure 15 is an exploded perspective view from another angle of the cap according to the embodiment of figures 13, 14;
- figure 16 is an exploded perspective view of another example of the motor not according to the present invention;
- figure 17 is a perspective view of the cap of the motor according to the example of figure 16;
- figure 18 is an exploded perspective view from another angle of the cap according to the example of figures 16, 17.

### EMBODIMENTS OF THE INVENTION

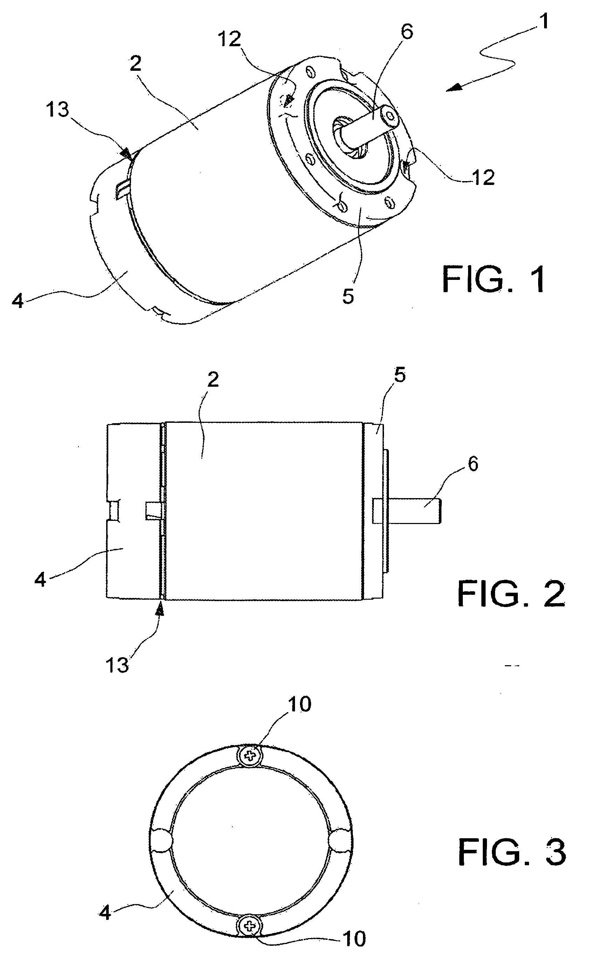

With reference to the attached figure 1, a direct current electric motor according to the present invention is wholly indicated with 1.

The electric motor according to the present invention is intended for the most varied fields. In the embodiment described hereafter, the electric motor is of the type with two poles.

The electric motor comprises a stator 2, a rotor 3 rotatably supported inside the stator 2, a brush-carrying cap 4 and a closing element 5, shaped like a flange, opposite the brush-carrying cap 4.

The stator 2 is of the type with permanent magnets, and will not be described any further since it is known in the field: however, it does not, in its specific characteristics, constitute the object of the present invention.

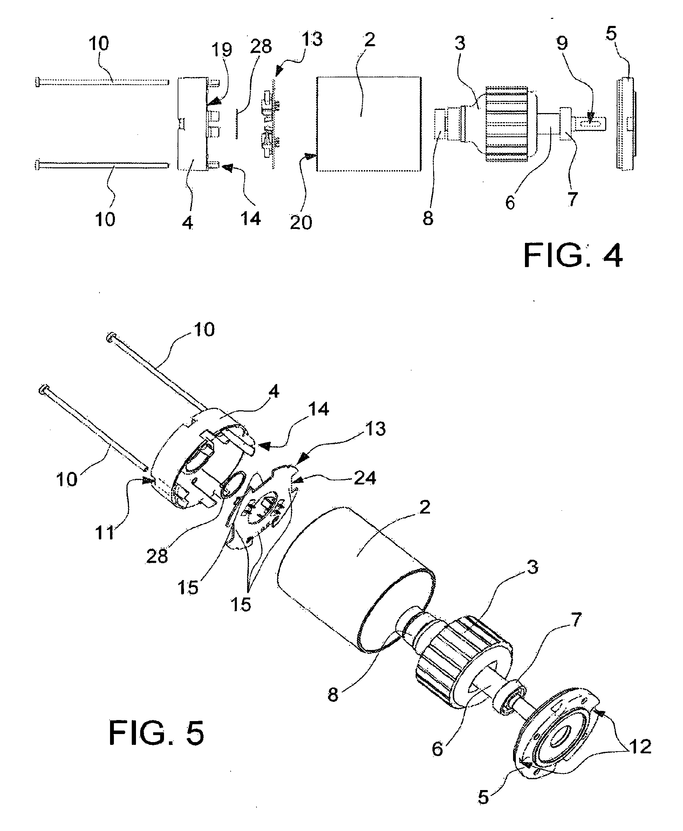

The rotor 3 is provided with windings made from electrically conductive material, of the essentially known type and the characteristics of which do not specifically constitute the object of the present invention. As can be seen, in detail, in figures 4, 5, the rotor 3 possesses a shaft 6 that is rotatably supported, at bearings 7, 8, on one side in the brush-carrying cap 4, and on the other side in the closing element 5.

At the end 7 there can be a recess 9 for a tongue, key, or other. There can be other coupling means or other transmission members.

The electric motor 1 also comprises removable connection members 10 of the cap 4 to the stator 2. Such removable connection members 10, more specifically, comprise one or more pairs of screws 10 engaged in diametrically opposite holes 11 of the cap 4, and screwed into corresponding threaded holes 12 foreseen in the closing element 5 opposite the cap 4.

The electric motor 1 also comprises a brush-carrying base 13, for feeding electricity to the rotor 3, according to ways essentially known in the field of direct current electric motors.

The brush-carrying base 13 is locked in a pack between the stator 2 and the cap 4. In order to obtain a precise coupling between the cap 4, the base 13 and the stator 2, the cap 4 itself is provided with centred coupling means 14 with the stator 2.

In the centred coupling means 14 peripheral portions 15 of the base 13 engage, as will become clearer hereafter.

The centred coupling means 14 comprise at least one appendage 16 that extends axially from the inner surface 17 of the cap 4, and that is suitable for coupling with the inner surface of the stator 2.

In greater detail, the centred coupling means 14 comprise a plurality of pairs of appendages 16 that extend axially from the inner surface 17 of the cap 4. The appendages 16 each comprise a substantially semi-cylindrical portion joined to a substantially parallelepiped portion, which directly couples, with its outer face 18, with the inner surface of the stator 2.

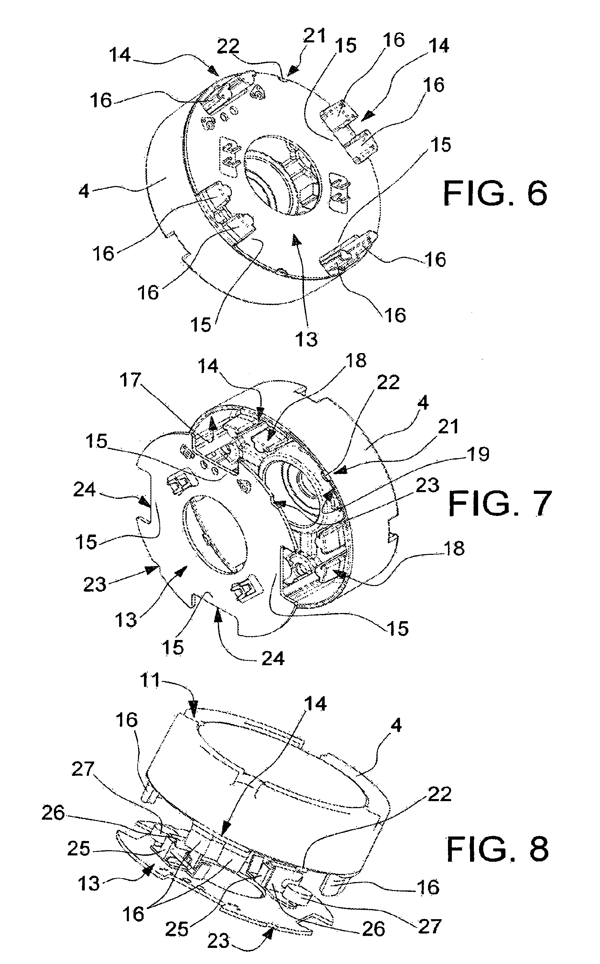

As can be seen in figures 6, 7 and 8, and just as an example, the pairs of appendages 16 are four in number, equally angularly spaced by 90°. The number of pairs of appendages 16 can in reality be any: for example a greater number of pairs of appendages 16 makes is possible to obtain an even more precise coupling with the inner surface of the stator 2.

The connection screws 10 of the cap 4 to the closing element 5 pass between the appendages 16 of two opposite pairs, along the respective holes 11.

In this way, a wider coupling surface is obtained and the screws 10 are kept inside the appendages 16. The cap 4 comprises an annular abutment surface 19 for the brush-carrying base 13. Correspondingly, the stator 2 also comprises an abutment edge 20 for locking the brush-carrying base 13 in a pack, as can be clearly seen, for example in figure 2.

The cap 4 also comprises centring means 21 for the brush-carrying base 13. Such centring means 21 comprise a pair of diametrically opposite teeth 22, foreseen on the abutment surface 19, suitable for engaging in respective seats 23 foreseen in the periphery of the brush-carrying base 13. The centring means 21 also constitute an anti-rotation constraint of the base 13 with respect to the cap 4. The base 13 is circular in shape, with a diameter substantially equal to that of the cap 4, and it as a central opening for the passage of the rotor 3. The peripheral portions 15 of the base 13 comprise respective recesses 24, in which the pairs of appendages 16 engage. The recesses 24 are substantially rectangular in shape, rounded at the corners. Clearly, and again as an example, the recesses 24 are also four in number, equally spaced by 90°. The number of recesses 24 can be whatever, in relation to the number of pairs of appendages 16. The base 13 comprises two opposite brushes 25, of the *per sé* known type. The brushes 25 are slidably mounted in respective brackets 26 fixed to the base 13. The brushes 25 are kept in electrical contact with known elastic means 27, which will not be described any further.

Between the base 13 and the cap 4 there can be a compensation ring 28, on one side or the other with respect to the rotor 3.

The invention, thus conceived, allows important technical advantages to be obtained.

One important technical advantage consists of the fact that the brush-carrying base 13 is directly locked and centred between the cap 4 and the stator 2: it is thus fixed in the correct operating position without the need to use further connection means.

Moreover, the assembly of the base 13 between the cap 4 and the stator 2 is carried out extremely quickly and easily, with substantial saving of time and costs, since the base 13 is directly arranged between the cap 4 and the stator 2, and it is not necessary to carry out a preliminary step of mounting the base 13 itself on the cap 4.

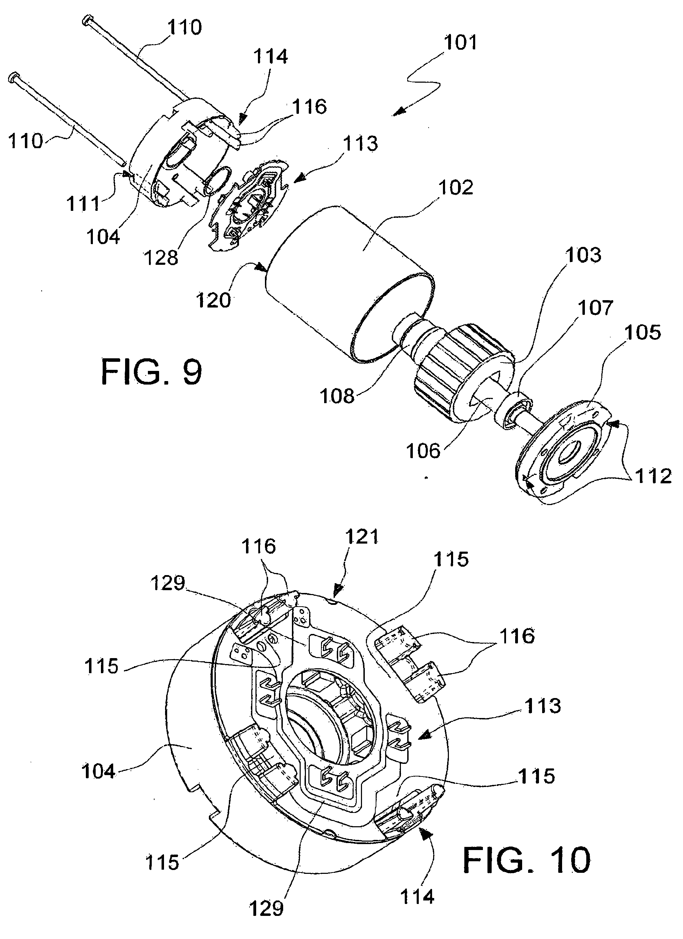

Another embodiment of the electric motor according to the present invention is represented in figures 9 - 12.

In this embodiment, the parts that correspond to those of the previous embodiment are indicated, also in figures 9 - 12, with the same reference numeral increased by 100.

In this embodiment, the electric motor 101 is identical to that of the previous embodiment: the only difference consists of the fact that the motor has four poles instead of two.

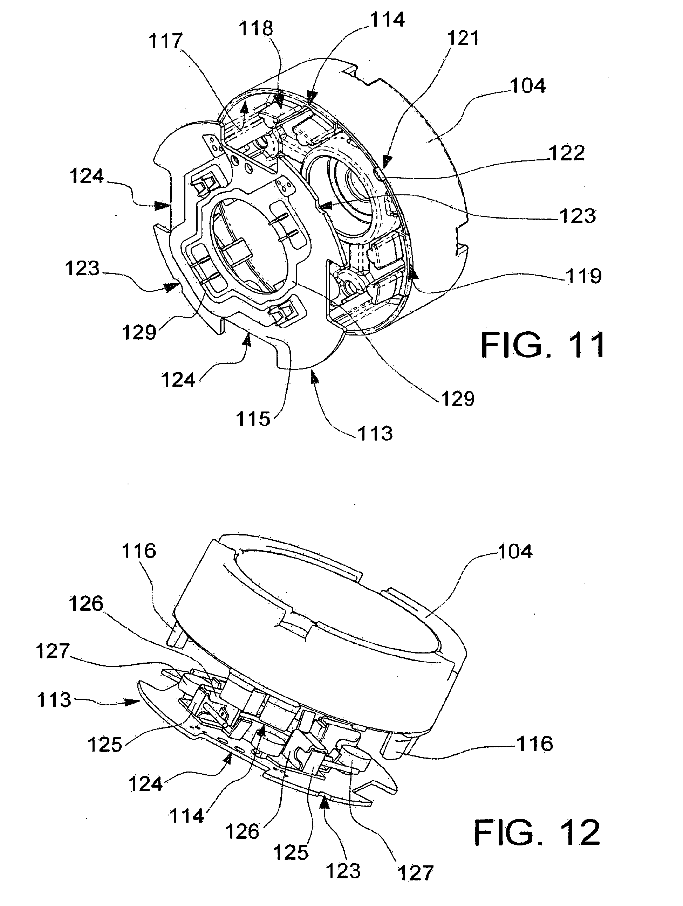

The brush-carrying base 113 of the motor 101, indeed, comprises four brushes 125 instead of two. In the base 113 there are printed circuits 129, visible in figures 10, 11, for connecting the brushes 125 two-by-two, in a *per sé* known way in the field.

In other embodiments, as an alternative to the printed circuits 129, there can be printed brush-carrying bases with conventional wired electrical connections.

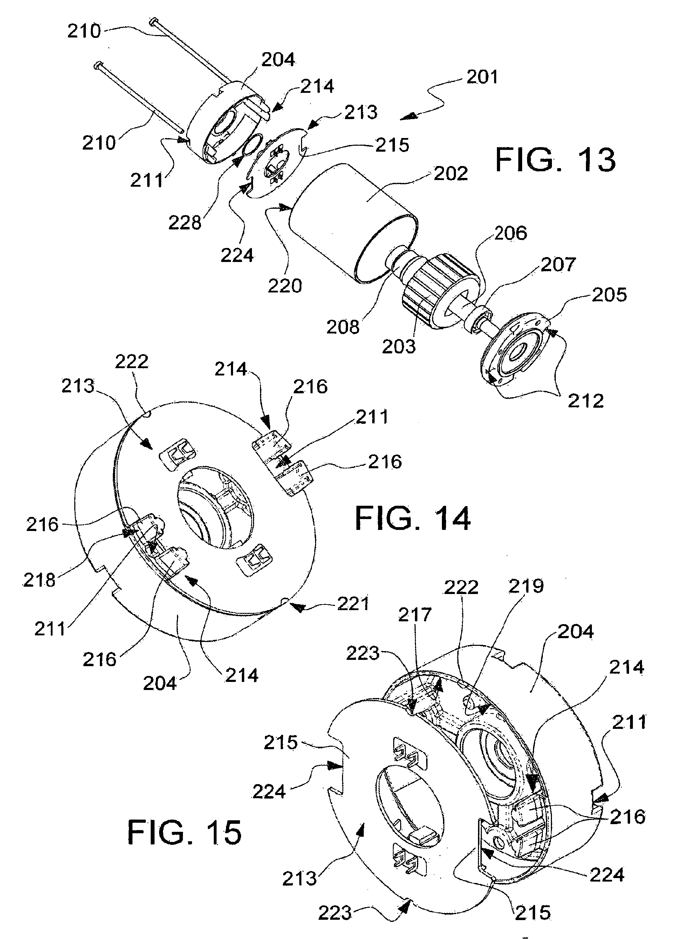

Another embodiment of the motor according to the present invention is represented in figures 13 -15. In this embodiment, the parts that correspond to those of the previous embodiment are indicated, also in figures 13 - 15, with the same reference numeral increased by 100.

The electric motor 201 of figures 13 - 15 is of the type with two poles, of relatively small size. In this motor, the centred coupling means 214 comprise two pairs of diametrically opposite appendages 216, and no longer four, clearly for reasons of bulk and of available space inside the cap 204. As can be seen in figure 14, the centring means 221 are foreseen spaced by 90° from the centred coupling means 214.

Also in this embodiment, the holes 211 for the screws 210 to pass through are foreseen between the appendages 216 of each of the pairs that constitute the centred coupling means 214.

With this solution, therefore, even for relatively small motors, a precise coupling of the cap 204 with the stator 202 is obtained thanks to the presence of the centred coupling means 214, and at the same time the holes 211 are foreseen between the appendages 216 so as to be comprised in the bulk of the latter. Correspondingly, the base 213 comprises two recesses 224 diametrically opposite one another, which engage in the pairs of appendages 216. This makes it possible to obtain, in the base 213, a larger peripheral surface on which the abutment surface 219 and the abutment edge 220 of the stator 202 are locked: the locking is thus precise, solid and stable.

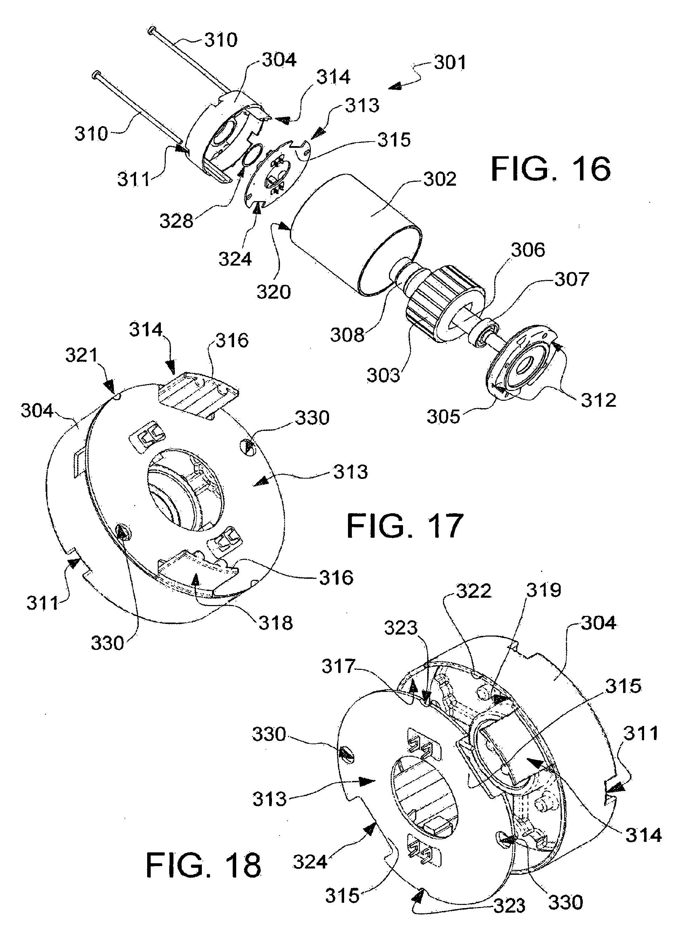

Another embodiment of the motor not according to the present invention is represented in figures 16 -18. In this embodiment, the parts that correspond to those of the previous embodiment are indicated, also in figures 16 - 18, with the same reference numeral increased by 100.

The electric motor 301 of figures 16 - 18 is again of the type with two poles, of relatively small size.

In this example, the centred coupling means 314 comprise two diametrically opposite appendages 316, each consisting of a single body. As can be seen in figure 17, each of the appendages 316 consists of a substantially parallelepiped body, of thin thickness, which extends from the inner surface 317 of the cap 304, joined to two cylindrical reinforcement bodies.

Each of the appendages 316 engages in respective diametrically opposite recesses 324, foreseen in the base 313.

In the cap 304 there are also holes 311 for the screws 310 to pass through; correspondingly, in the base 313 there are further holes 330 for the same screws 310 to pass through.

The appendages 316 are thus equipped with outer faces 318 with a larger surface: this fact allows an even more precise coupling with the stator 302, although with much smaller spaces available inside the cap 304.

The holes 311 for the screws 310 can also be foreseen at the appendages 316, so as to make the construction of the cap 304 more compact.

The number of poles of the electric motor according to the invention can clearly be whatever, without limiting the purposes of the present invention.

It has thus been seen how the invention achieves the proposed purposes.

## Claims

1. Direct current electric motor, comprising a stator (2; 102; 202), a rotor (3; 103; 203) rotating within the stator (2; 102; 202) and a brush holder cap (4; 104; 204) to which a brush holder plate (13; 113; 213) is coupled for feeding said rotor (3; 103; 203), said brush holder plate (13; 113; 213) being tightened between said stator (2; 102; 202) and said cap (4; 104; 204), said cap (4; 104; 204) being provided with means (14; 114; 214) for centred coupling with said stator (2;102; 202) in which peripheral portions (15; 115; 215) of said plate (13; 113; 213) are engaged, said means for centred coupling (14; 114; 214) comprising a plurality of pairs of appendages (16; 116; 216) axially projecting from the inner surface (17; 117; 217) of said cap (4; 104; 204) adapted to couple to the inner surface of said stator (2; 102; 202), said motor further comprising removable connecting organs (10; 110; 210) for connecting said cap (4; 104; 204) to said stator (2; 102; 202) comprising at least one pair of screws (10; 110; 210) engaged in diametrically opposed holes (11; 111; 211) of said cap (4; 104; 204) provided at said appendages (16; 116; 216) and screwed into corresponding threaded holes (12; 112; 212) provided in a closing element (5; 105; 205) opposite said cap (4; 104; 204), so as to clamp said plate (13; 113; 213) between said cap (4; 104; 204) and said stator (2; 102; 202), **characterized in that** said holes (11; 111; 211) are foreseen between the appendages of two opposite pairs (16; 116; 216).

2. Electric motor according to claim 1, in which said peripheral portions of said plate (13; 113; 213) comprise respective recesses (24; 124; 224) in which said pairs of appendages (16; 116; 216) engage.

3. Electric motor according to claim 1, in which said cap (4; 104; 204) comprises an abutment surface (19; 119; 219) for the periphery of said brush holder plate (13; 113; 213).

4. Electric motor according to claim 1, in which said stator (2;102; 202) comprises an abutment edge (20; 120; 220) for tightening said brush holder plate (13; 113; 213) to full torque.

5. Electric motor according to claim 1, in which said cap (4; 104; 204) comprises centering means (21; 121; 221) for said brush holder plate (13; 113; 213).

6. Electric motor according to the preceding claim, in which said centering means (21; 121; 221) comprise at least one pair of opposed teeth (22; 122; 222) provided on said abutment surface (19; 119; 219), adapted to engage in respective seats (23; 123; 223) provided in the periphery of said brush holder plate (13; 113; 213).

## Patentansprüche

1. Gleichstromelektromotor, der einen Stator (2; 102; 202), einen Rotor (3; 103; 203), der sich im Stator (2; 102; 202) dreht, und einen Bürstenhaltedeckel (4; 104; 204) umfasst, mit dem eine Bürstentragplatte (13; 113; 213) zur Speisung des Rotors (3; 103; 203) verbunden ist, wobei diese Bürstentragplatte (13; 113; 213) zwischen dem Stator (2; 102; 202) und dem Deckel (4; 104; 204) festgemacht ist, wobei dieser Deckel (4; 104; 204) mit Mitteln (14; 114; 214) zum zentrierten Verbinden mit dem Stator (2; 102; 202) versehen ist, in die Umfangsabschnitte (15; 115; 215) der Platte (13; 113; 213) eingreifen, wobei diese Mittel zum zentrierten Verbinden (14; 114; 214) eine Vielzahl von Paaren von axial von der Innenfläche (17; 117; 217) des Deckels (4; 104; 204) vorstehenden Fortsätzen (16, 116; 216) umfassen, die zum Verbinden mit der Innenfläche des Stators (2; 102; 202) geeignet sind, wobei dieser Motor ferner lösbare Verbindungsorgane (10; 110; 210) zum Verbinden des Deckels (4; 104; 204) mit dem Stator (2; 102; 202) umfasst, die mindestens ein Paar Schrauben (10; 110; 210) umfassen, die in diametral entgegengesetzte Löcher (11; 111; 211) des Deckels (4; 104; 204) eingreifen, die an den Fortsätzen (16; 116; 216) vorgesehen sind, und in entsprechende Gewindebohrungen (12; 112; 212) geschraubt sind, die in einem dem Deckel (4; 104; 204) gegenüberliegenden Verschlusselement (5; 105; 205) vorgesehen sind, um die Platte (13; 113; 213) zwischen dem Deckel (4; 104; 204) und dem Stator (2; 102; 202) einzuspannen, **dadurch gekennzeichnet, dass** diese Löcher (11; 111; 211) zwischen den Fortsätzen von zwei gegenüberliegenden Paaren (16; 116; 216) vorgesehen sind.

2. Elektromotor nach Anspruch 1, wobei die Umfangsabschnitte der Platte (13; 113; 213) jeweilige Aussparungen (24; 124; 224) umfassen, in die die Paare von Fortsätzen (16; 116; 216) eingreifen.

3. Elektromotor nach Anspruch 1, wobei der Deckel (4; 104; 204) eine Anlagefläche (19; 119; 219) für den Umfang der Bürstentragplatte (13; 113; 213) umfasst.

4. Elektromotor nach Anspruch 1, wobei der Stator (2; 102; 202) einen Anlagerand (20; 120; 220) zum Festziehen der Bürstentragplatte (13; 113; 213) mit dem Vollastdrehmoment umfasst.

5. Elektromotor nach Anspruch 1, wobei der Deckel (4; 104; 204) Zentriermittel (21; 121; 221) für die Bürstentragplatte (13; 113; 213) umfasst.

6. Elektromotor nach dem vorhergehenden Anspruch, wobei die Zentriermittel (21; 121; 221) mindestens ein Paar gegenüberliegender Zähne (22; 122; 222) umfassen, die auf der Anlagefläche (19; 119; 219) vorgesehen und geeignet sind, in jeweilige Aufnahmen (23; 123; 223) einzugreifen, die im Umfang der Bürstentragplatte (13; 113; 213) vorgesehen sind.

## Revendications

1. Moteur électrique à courant continu, comprenant un stator (2; 102; 202), un rotor (3; 103; 203) tournant à l'intérieur du stator (2; 102; 202) et un couvercle porte-balais (4; 104; 204) auquel une plaque porte-balais (13; 113; 213) est accouplée pour alimenter ledit rotor (3; 103; 203), ladite plaque porte-balais (13; 113; 213) étant serrée entre ledit stator (2;102; 202) et ledit couvercle (4; 104; 204), ledit couvercle (4; 104; 204) étant doté de moyens (14; 114; 214) pour l'accouplement centré avec ledit stator (2;102; 202) dans lesquels des portions périphériques (15; 115; 215) de ladite plaque (13; 113; 213) sont engagées, lesdits moyens pour l'accouplement centré (14; 114; 214) comprenant une pluralité de paires d'appendices (16; 116; 216) faisant saillie axialement à partir de la surface intérieure (17; 117; 217) dudit couvercle (4; 104; 204) adaptées pour s'accoupler avec la surface intérieure dudit stator (2; 102; 202), ledit moteur comprenant en outre des organes de connexion amovibles (10; 110; 210) pour connecter ledit couvercle (4; 104; 204) audit stator (2; 102; 202) comprenant au moins une paire de vis (10; 110; 210) engagées dans des trous diamétralement opposés (11; 111; 211) dudit couvercle (4; 104; 204) prévus au niveau desdits appendices (16; 116; 216) et vissées dans des trous filetés correspondants (12; 112; 212) prévus dans un élément de fermeture (5; 105; 205) opposé audit couvercle (4;104; 204), de manière à serrer ladite plaque (13; 113; 213) entre ledit couvercle (4; 104; 204) et ledit stator (2; 102; 202), **caractérisé en ce que** lesdits trous (11; 111; 211) sont prévus entre les appendices de deux paires opposées (16; 116; 216).

2. Moteur électrique selon la revendication 1, dans lequel lesdites portions périphériques de ladite plaque (13; 113; 213) comprennent des évidements respectifs (24; 124; 224) dans lesquels s'engagent lesdites paires d'appendices (16; 116; 216).

3. Moteur électrique selon la revendication 1, dans lequel ledit couvercle (4; 104; 204) comprend une surface de butée (19; 119; 219) pour la périphérie de ladite plaque porte-balais (13; 113; 213).

4. Moteur électrique selon la revendication 1, dans lequel ledit stator (2; 102; 202) comprend un bord de butée (20; 120; 220) pour le serrage de ladite plaque porte-balais (13; 113; 213) au couple à pleine charge.

5. Moteur électrique selon la revendication 1, dans lequel ledit couvercle (4; 104; 204) comprend des moyens de centrage (21; 121; 221) pour ladite plaque porte-balais (13; 113; 213).

6. Moteur électrique selon la revendication précédente, dans lequel lesdits moyens de centrage (21; 121; 221) comprennent au moins une paire de dents opposées (22; 122; 222) prévues sur ladite surface de butée (19; 119; 219), adaptées pour s'engager dans des sièges respectifs (23; 123; 223) prévues dans la périphérie de ladite plaque porte-balais (13; 113; 213).
